(19) Europäisches Patentamt

European Patent Office

Office européen des brevets

(11) **EP 1 314 173 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **01960148.3**

(22) Anmeldetag: **03.08.2001**

(51) Int Cl.:
*H01G 4/12* (2006.01)    *C04B 35/495* (2006.01)

(86) Internationale Anmeldenummer:
**PCT/DE2001/002971**

(87) Internationale Veröffentlichungsnummer:
**WO 2002/019355 (07.03.2002 Gazette 2002/10)**

(54) **KONDENSATOR MIT EINER SILBER NIOBIUM TANTALAT ENTHALTENDEN DIELEKTRISCHEN KERAMISCHEN SCHICHT**

CAPACITOR COMPRISING A DIELECTRIC CERAMIC LAYER CONTAINING SILVER NIOBIUM TANTALATE

CONDENSATEUR POURVU D'UNE COUCHE CERAMIQUE DIELECTRIQUE CONTENANT DU NIOBIUM TANTALATE D'ARGENT

(84) Benannte Vertragsstaaten:
**AT BE CH CY DE DK ES FI FR GB GR IE IT LI LU MC NL PT SE TR**

(30) Priorität: **29.08.2000 DE 10042359**

(43) Veröffentlichungstag der Anmeldung:
**28.05.2003 Patentblatt 2003/22**

(73) Patentinhaber: **EPCOS AG**
**81669 München (DE)**

(72) Erfinder:
• **SOMMARIVA, Helmut**
**A-8053 Graz (AT)**
• **HOFFMANN, Christian**
**A-8530 Deutschlandsberg (AT)**
• **VALANT, Matjaz**
**1000 Ljubljana (SI)**
• **SUVOROV, Danilo**
**1000 Ljubljana (SI)**

(74) Vertreter: **Epping - Hermann - Fischer**
**Ridlerstrasse 55**
**80339 München (DE)**

(56) Entgegenhaltungen:
**US-A- 4 283 752**

• **VALANT M ET AL: "New high-permittivity AgNb/sub 1-x/Ta/sub x/O/sub 3/ microwave ceramics. I. Crystal structures and phase-decomposition relations" JOURNAL OF THE AMERICAN CERAMIC SOCIETY, JAN. 1999, AMERICAN CERAMIC SOC, USA, Bd. 82, Nr. 1, Seiten 81-87, XP002186343 ISSN: 0002-7820**
• **PATENT ABSTRACTS OF JAPAN vol. 2000, no. 05, 14. September 2000 (2000-09-14) -& JP 2000 044339 A (KYOCERA CORP), 15. Februar 2000 (2000-02-15)**

**Beschreibung**

Die Erfindung betrifft einen Kondensator mit zwei oder mehreren paarweise einander gegenüberliegenden Elektrodenschichten und jeweils einer dazwischenliegenden Dielektrikumschicht, bei dem die Dielektrikumschichten ein Keramikmaterial umfassen.

Aus der Druckschrift M. Valant, D. Suvorov, "Microwave Ceramics with Permittivity over 400", The 9th International Meeting on Ferroelectricity, Seoul, South Korea, 1997, Abstract Book, P-05-TH-067 sind Vielschichtkondensatoren bekannt, deren Dielektrikumschichten eine Keramik aufweisen, denen eine Niob-basierte perowskitartige "Solid-Solution" mit der allgemeinen Formel $A(B_{1-x}Nb_x)O_3$ zugrunde liegt. Es wurde gefunden, daß solche Keramiken sich durch eine hohe Dielektrizitätskonstante $\varepsilon > 400$ auszeichnen. Darüber hinaus weisen diese Keramikmaterialien bei niedrigen Frequenzen zwischen 100 kHz und 1 MHz geeignete dielektrische Eigenschaften auf, so daß sie für den Einsatz in Vielschichtkondensatoren geeignet sind.

Aus, der Druckschrift A. Kania, $Ag(Nb_{1-x}Ta_x)O_3$ Solid Solutions - Dielectric Properties and Phase Transitions, Phase Transitions, 1983, Volume 3, pp. 131 bis 140, ist ein Keramikmaterial bekannt, das auf der Basis von Silber, Niob und Tantal, im folgenden ANT genannt, hergestellt ist und das in Form einer "Solid Solution" der beiden Materialien $AgNbO_3$ und $AgTaO_3$ vorliegt. Die in dieser Druckschrift beschriebene Keramik weist die Zusammensetzung $Ag(Nb_{1-x}Ta_x)O_3$, im folgenden ANTx genannt, auf, wobei x zwischen 0 und 0,7 variieren kann. Je nach Zusammensetzung weist die Keramik bei einer Temperatur von etwa 300 K ein $\varepsilon$ zwischen 80 und 400 auf.

Aus der Druckschrift Matjaz Valant, Danilo Suvorov, New High-Permittivity $Ag(Nb_{1-x}Ta_x)O_3$ Microwave Ceramics: Part 2, Dielectric Characteristics, J. Am. Ceram. Soc. 82 [1], pp. 88 - 93 (1999) ist es bekannt, daß scheibenförmige Keramikkörper aus ANTx mit einem x-Parameter zwischen 0,46 und 0,54 eine starke relative Änderung der Dielektrizitätskonstanten e im Temperaturintervall zwischen -20 °C und 120 °C aufweisen. Dabei wurde insbesondere gezeigt, daß der Verlauf der relativen Änderung von $\varepsilon$ mit der Temperatur einer Kurve folgt, die zwischen 20 °C und 70 °C ein Maximum aufweist und Werte zwischen -0,07 und 0,01 annimmt.

Ferner ist aus der Druckschrift WO 98/03446 bekannt, daß durch Dotierung von ANT mit Lithium, Wolfram, Mangan oder Wismut der Temperaturkoeffizient der Dielektrizitätskonstanten TK$\varepsilon$ bei einzelnen Temperaturen auf sehr kleine Werte bis zu +/-70 ppm/K reduziert werden kann.

Die bekannten ANT-Materialien weisen zwar ein hohes $\varepsilon$ auf, haben jedoch den Nachteil, daß TK$\varepsilon$ in dem für Anwendungen interessanten Temperaturbereich zwischen -20° C und 80 °C relativ hohe Werte aufweist. Durch einen hohen Temperaturkoeffizienten der Dielektrizitätskonstante $\varepsilon$ entsteht gleichzeitig ein hoher Temperaturkoeffizient der Kapazität des Kondensators.

Ziel der vorliegenden Erfindung ist es daher, einen Kondensator bereitzustellen, dessen Dielektrikum einen niedrigen Temperaturkoeffizienten der Dielektrizitätskonstante aufweist.

Dieses Ziel wird erfindungsgemäß durch einen Kondensator nach Patentanspruch 1 erreicht. Vorteilhafte Ausgestaltungen der Erfindung sind den weiteren Patentansprüchen zu entnehmen.

Die Erfindung gibt einen Kondensator an, der zwei oder mehrere paarweise einander gegenüberliegende Elektrodenschichten aufweist, zwischen denen jeweils eine Dielektrikumschicht angeordnet ist. Dabei umfassen die Dielektrikumschichten ein Keramikmaterial, das wenigstens zwei verschiedene Komponenten enthält, die jeweils in voneinander getrennten Phasen vorliegen. Jede der Komponenten weist dabei eine Perowskitstruktur auf, die an den A-Plätzen Silber und an den B-Plätzen Niob und Tantal enthält. Die Zusammensetzung einer der Komponenten (Komponente A) und die Zusammensetzung einer weiteren der Komponenten (Komponente B) sind jeweils so gewählt, daß die Temperaturkoeffizienten ihrer Elektrizitätskonstanten TK$\varepsilon_A$ und TK$\varepsilon_B$ in einem Temperaturintervall voneinander verschiedene Vorzeichen aufweisen.

Das ANT-Material hat den Vorteil, daß es ein hohes e > 300 aufweist. Ferner hat das erfindungsgemäße Keramikmaterial den Vorteil, daß es niedrige dielektrische Verluste aufweist. Durch die Mischung zweier Komponenten, die jeweils ein TK$\varepsilon$ mit unterschiedlichen Vorzeichen aufweisen, kann erreicht werden, daß sich die Temperaturabhängigkeiten der Dielektrizitätskonstanten größtenteils kompensieren, so daß das erfindungsgemäße Keramikmaterial ein kleineres TKe als seine Komponenten aufweist. Die Kompensation kann dabei nicht nur stellenweise bei festen Temperaturen, sondern über das ganze Temperaturintervall erfolgen, innerhalb dessen die einzelnen Komponenten unterschiedliche Vorzeichen aufweisen. Die Kompensation beschränkt sich also nicht auf einzelne Punkte auf der Temperaturskala.

Da die Komponenten in dem erfindungsgemäßen Keramikmaterial als getrennte Phasen vorliegen, kann der TK$\varepsilon$ des Keramikmaterials für den Fall, daß es lediglich aus zwei verschiedenen Komponenten besteht, durch die im folgenden formulierte Lichtenecker-Regel angegeben werden:

$$TK\epsilon = V \times TK\epsilon_A + (1-V) \times TK\epsilon_B.$$

Dabei bedeutet V den Volumenanteil der Komponente A am Gesamtvolumen der Komponenten und $TK\epsilon_A$ beziehungsweise $TK\epsilon_B$ die Temperaturkoeffizienten der Komponenten A und B.

Aus der Lichtenecker-Regel geht hervor, daß durch geeignete Wahl des Volumenanteils der Komponente A für eine bestimmte Temperatur eine vollständige Kompensation der Temperaturkoeffizienten der Dielektrizitätskonstanten erfolgen kann. Diese Lichtenecker-Regel wird nun benutzt, um einen optimalen Volumenanteil der Komponente A am Gesamtvolumen der Komponenten A und B zu bestimmen, so daß in dem Temperaturintervall, innerhalb dessen die einzelnen Komponenten unterschiedliche Vorzeichen aufweisen, eine optimale Kompensation der Temperaturkoeffizienten erzielt werden kann.

Dazu wird erfindungsgemäß der Volumenanteil der Komponente A am Gesamtvolumen der Komponenten A und B so gewählt, daß er weniger als 25 % von einem Volumenanteil V abweicht, der durch die folgende Formel berechnet ist:

$$V \times S_A + (1-V) \times S_B = 0.$$

Dabei bedeuten $S_A$ und $S_B$ jeweils die Steigung derjenigen Geraden, die am besten an den jeweiligen temperaturabhängigen Verlauf der relativen Änderung der Dielektrizitätskonstanten der Komponente A beziehungsweise der Komponente B in dem Temperaturintervall angepaßt ist.

Durch die erfindungsgemäße Übertragung der für einzelne Temperaturen gültigen Lichtenecker-Regel auf ein Temperaturintervall kann erreicht werden, daß eine optimale Kompensation von Temperaturkoeffizienten $TK\epsilon$ mit verschiedenen Vorzeichen erzielt wird. Mit Hilfe der oben angegebenen Rechenvorschrift wird das mit dem Volumenanteil gewichtete Mittel der Temperaturkoeffizienten $TK\epsilon$ zur Berechnung geeigneter Volumenanteile benutzt.

Da die der Berechnung zugrundeliegende Lichtenecker-Regel die $TK\epsilon$-Werte linear addiert, funktioniert die Kompensation der Temperaturkoeffizienten TKe um so besser, je besser der temperaturabhängige Verlauf der relativen Änderung der Dielektrizitätskonstanten der einzelnen Komponenten an einen linearen Verlauf angepaßt werden kann. Daher ist es erstrebenswert, durch eine geeignete Zusammensetzung der Komponenten einen solchen linearen Verlauf möglichst gut anzunähern.

Eine solche Annäherung eines linearen Verhaltens kann besonders vorteilhaft dadurch erfolgen, indem bei einer der Komponenten das Mengenverhältnis Niob/Tantal geeignet gewählt ist.

Damit die Kompensation gegenläufiger Temperaturverläufe funktioniert, müssen die Komponenten A und B in voneinander getrennten Phasen vorliegen.

Versuche haben gezeigt, daß eine erste Möglichkeit der Realisierung getrennter Phasen darin besteht, die Komponenten A und B jeweils als nicht zu kleine Partikel mit einer Partikelgröße > 5 $\mu$m zu vermischen. Falls kleinere Partikelgrößen verwendet werden, findet zwischen den Komponenten durch Diffusion ein Materialaustausch statt und es bildet sich eine "Solid Solution", die ein neues Material mit entsprechend neuen Eigenschaften darstellt. Eine einfache "lineare Superposition" der Komponenten A und B, wie sie durch die Lichtenecker-Regel beschrieben wird, ist dann nicht mehr möglich. Die Verwendung von Partikelgrößen > 5 $\mu$m bewirkt, daß aufgrund der langsamen Diffusionsprozesse lediglich Randgebiete der Partikel sich miteinander vermischen, so daß im wesentlichen noch getrennte Phasen von Komponente A und Komponente B übrig bleiben.

Eine weitere Möglichkeit, die beiden Komponenten A und B in getrennten Phasen aufrecht zu erhalten, besteht darin, die Komponenten A und B jeweils in unterschiedlichen Dielektrikumschichten anzuordnen, die durch dazwischenliegende Elektrodenschichten voneinander getrennt sind. Diese Elektrodenschichten können beispielsweise metallische Schichten, insbesondere Silber/Palladium-Elektrodenschichten sein, die einen Austausch von Material zwischen den Komponenten A und B während des Sinterns wirksam verhindern können, da sie eine Diffusionsbarriere darstellen. Dazu ist es erforderlich, Dielektrikumschichten herzustellen, die nur die Komponente A enthalten, sowie Dielektrikumschichten, die lediglich die Komponente B des Keramikmaterials enthalten.

Durch die Trennung der einzelnen Phasen mittels der dazwischenliegenden Elektrodenschichten wird es auch möglich, die Komponenten A und B der Keramik in Form von Partikeln, die kleiner sind als weiter oben beschrieben im Kondensator anzuordnen. Aufgrund der Verhinderung der Diffusion zwischen Komponente A und Komponente B spielt die Größe der Partikel keine entscheidende Rolle mehr und die Komponenten A und B können nun beispielsweise in Form von Körnern einer Ausdehnung zwischen 100 nm und 5 $\mu$m vorliegen, wie sie durch die Standardverfahren der Keramikherstellung in einem Mahlprozeß leicht herstellbar sind.

Das Vorliegen der verschiedenen Komponenten in Form von kleinen Körnern erlaubt es zudem, die Dielektrikumschichten des Kondensators mit einer sehr geringen Dicke zwischen 1 und 50 $\mu$m herzustellen. Dadurch kann bei gleichem Volumen eine wesentlich größere Zahl von Dielektrikumschichten und mithin mehr den Kondensator bildende Teilkondensatoren untergebracht werden. Dadurch steigt die Volumenausnutzung des Kondensators in vorteilhafter Weise an. Solch dünne Dielektrikumschichten zwischen 1 und 50 $\mu$m sind bei Verwendung von Komponenten in Form von großen Partikeln nicht möglich, da bereits eine Monolage von Partikeln die erlaubte Schichtdicke der Dielektrikumschicht übersteigen würde.

Darüber hinaus ist ein Kondensator besonders vorteilhaft, bei dem die übereinanderliegenden Dielektrikumschichten durch Übereinanderstapeln von jeweils metallisierten keramischen Grünfolien der Komponente A und jeweils metallisierten keramischen Grünfolien der Komponente B und anschließendes Sintern des Folienstapels hergestellt sind. Die Metallisierung der Grünfolien bildet dabei die Elektrodenschichten. Ein solcher Kondensator erlaubt weitgehend die Verwendung der bekannten Verfahren zur Herstellung von Vielschichtkondensatoren. Dabei spielt es auch keine Rolle, in welcher Reihenfolge die Grünfolien der Komponente A beziehungsweise die Grünfolien der Komponente B übereinandergestapelt werden, da üblicherweise der Kondensator eine Reihen- beziehungsweise Parallelschaltung der einzelnen Teilkondensatoren darstellt. Dadurch ist auf jeden Fall die Kompensation der Temperaturkoeffizienten der Dielektrizitätskonstanten der einzelnen Dielektrikumschichten sichergestellt.

Der Kondensator kann besonders vorteilhaft ein Keramikmaterial enthalten, das mit Hilfe von Borsäure als Sinterhilfsmittel hergestellt ist. Dabei hat die Borsäure den Vorteil, daß sie den Isolationswiderstand der ANT-Keramik nicht in nachteiliger Weise erniedrigt.

Im folgenden wird die Erfindung anhand von Ausführungsbeispielen und der dazu gehörigen Figur näher erläutert.

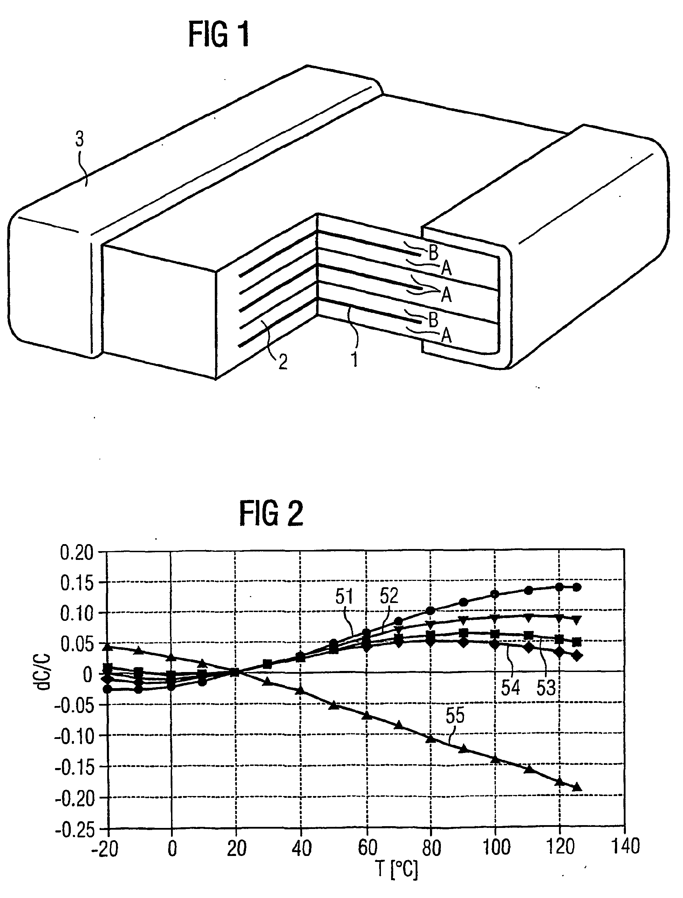

Figur 1 zeigt beispielhaft einen erfindungsgemäßen Kondensator in einer schematischen Schnittansicht.

Die übrigen Figuren 2 bis 8 zeigen jeweils den Verlauf von verschiedenen ANT-Materialien, die als Komponente A beziehungsweise Komponente B für den erfindungsgemäßen Kondensator verwendet werden können.

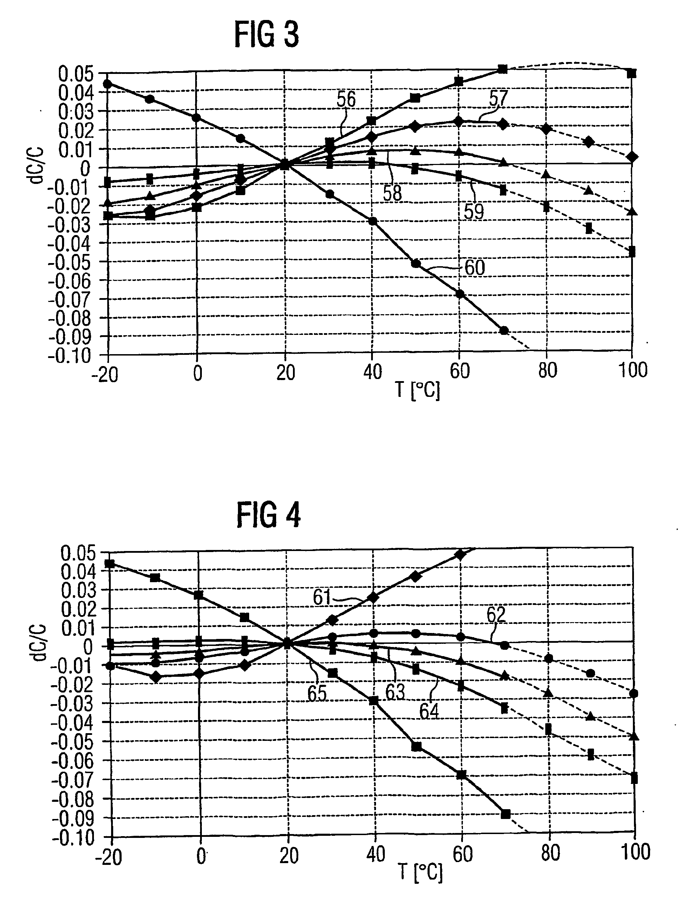

Die Figuren 3, 4, 5, 6, 7 und 8 zeigen zusätzlich den Verlauf von Mischungen einer Komponente A mit einer Komponente B.

In den Figuren ist jeweils die relative Änderung der Kapazität $\Delta$C/C der Scheibenprobe in Abhängigkeit von der Temperatur angegeben. Die Änderung der Kapazität ist über C = $\varepsilon \times$ A/d direkt mit der Größe $\Delta\varepsilon/\varepsilon$ verknüpft.

Figur 1 zeigt einen erfindungsgemäßen Kondensator mit Elektrodenschichten 1, die beispielsweise Silber/ Palladium-Elektroden sein können. Diese Elektrodenschichten 1 sind durch Dielektrikumschichten 2 voneinander getrennt. Dabei greifen zwei Arten von Dielektrikumschichten 2, die jeweils über eine Kontaktschicht 3 elektrisch miteinander verbunden sind, kammartig ineinander, wodurch eine Parallelschaltung von Teilkapazitäten hergestellt wird. Bei den Kontaktschichten 3 handelt es sich um Silber-Einbrennelektroden.

Die Dielektrikumschichten 2 umfassen, wie in der Figur 1 mit den Buchstaben A und B angedeutet, entweder eine Keramik der Komponente A oder eine Keramik der Komponente B. Gemäß dem Ausführungsbeispiel in Figur 1 sind vier Dielektrikumschichten 2 aus der Komponente A und zwei Dielektrikumschichten 2 aus der Komponente B in dem Kondensator angeordnet. Demnach beträgt das Volumenverhältnis Komponente A Komponente B in diesem Kondensator 4/2. Durch eine Erhöhung der Gesamtzahl an Dielektrikumschichten 2 und durch Wahl von verschiedenen Anzahlen von Dielektrikumschichten für die Komponente A beziehungsweise die Komponente B können so beliebige Mischungsverhältnisse zwischen der Komponente A und der Komponente B eingestellt werden.

Im folgenden werden verschiedene Keramikmaterialien, die als Komponente A beziehungsweise Komponente B geeignet sind, mit ihren elektrischen Eigenschaften vorgestellt. Dabei ist zu beachten, daß in jedem der beschriebenen Beispiele eine Mischung der Komponenten entweder in Form von miteinander vermischten Partikeln oder in Form von übereinanderliegenden, durch Elektrodenschichten voneinander getrennten Dielektrikumschichten, die jeweils einer Komponente A oder einer Komponente B zuzuordnen sind, durchgeführt werden kann. Bei den im folgenden beschriebenen Proben wurde jeweils 1 und 1,5 Gew.-% $H_3BO_3$ vor der abschließenden Kalzination bei 950 °C dem Keramikmaterial beigegeben. Anschließend wurde die Keramik bei 1070 °C für eine Dauer von 5 Stunden gesintert. Danach wurden die dielektrischen Eigenschaften der so hergestellten Materialien bei Frequenzen von 1 MHz und etwa 2 GHz untersucht.

Als Komponente B für die Komposit-Keramik wurde die aus den bereits weiter oben beschriebenen Zusammensetzungen bekannte Komponente B (ANTx mit x = 0,65) verwendet. Die Komponenten wurden als Partikel mit einer mittleren Korngröße von 30,9 $\mu$m (Komponente A) beziehungsweise 27,7 $\mu$m (Komponente B) miteinander vermischt und anschließend gemeinsam gesintert.

In einer ersten Versuchsreihe wurde eine Komponente B mit 1 Gew.-% $H_3BO_3$ sowie mehrere mögliche Komponenten A mit verschiedenen Überschüssen an Niob bezüglich Tantal untersucht. Die Ergebnisse sind in Figur 2 dargestellt. Dabei beziehen sich die Kurven 51 bis 54 auf jeweils eine Komponente A mit variierendem x-Gehalt und die Kurve 55 auf die oben genannte Komponente B mit x = 0,65. Kurve 51 beschreibt dabei die Zusammensetzung der Komponente B mit x = 0,35, Kurve 52 mit x = 0,38, Kurve 53 mit x = 0,40 und Kurve 54 mit x = 0,42.

Figur 2 zeigt, daß insbesondere die Zusammensetzung gemäß Kurve 51 eine gute Linearität des Verlaufs aufweist, wie er besonders zum Einsatz als Komponente A in dem erfindungsgemä-ßen Kondensator geeignet ist.

Mit den in Figur 2 gezeigten verschiedenen Komponenten A wurden Keramikmaterialien mit verschiedenen Mischungsverhältnissen Komponente A/Komponente B gemäß der folgenden Tabelle 1 hergestellt. In der ersten Spalte von Tabelle 1 ist der jeweils verwendete Überschuß an Niob der Komponente A als x-Wert angegeben. In der zweiten Spalte ist das gewichtsbezogene Verhältnis Komponente A / Komponente B angegeben. Die Spalten 3, 4, 5, 6 und 7 zeigen dielektrische Kernwerte bzw. die Schrumpfung S der Proben. In der letzten Spalte von Tabelle 1 ist für die jeweils bezüglich des Verlaufs optimale Mischung aus Komponente A und Komponente B der jeweils maximale relative Änderung der Dielektrizitätskonstante im Temperaturintervall von -20 °C bis 80 °C angegeben.

Tabelle 1: Dielektrizitätskonstante und dielektrische Verluste einer Komposit-Keramik mit 1 Gew.-% $H_3BO_3$ als Sinterhilfsmittel, gesintert bei 1070 °C für eine Dauer von 5 Stunden (Komponente B = ANTx mit x = 0,65).

| x | A/B | 1 MHz | | 2 GHz | | S | $|\Delta\varepsilon/\varepsilon|_{max}$ |
|---|---|---|---|---|---|---|---|
| | | e | tan$\delta$ | $\varepsilon'$ | Qxf [GHz] | [%] | [%] |
| 0,42 | 60/40 | 386 | 0,0007 | 371 | 597 | 10,1 | 1,8 |
| | 62,5/37,5 | 390 | 0,0002 | 398 | 566 | 9,7 | |
| | 70/30 | 408 | 0,0004 | 408 | 492 | 10,9 | |
| 0,40 | 40/60 | 328 | 0,0007 | 326 | 664 | 9,3 | |
| | 50/50 | 370 | 0,0004 | 385 | 577 | 9,6 | |
| | 60/40 | 385 | 0,0004 | 395 | 493 | 9,8 | 1,5 |
| 0,38 | 35/65 | 339 | 0,0010 | 355 | 654 | 10,2 | |
| | 45/55 | 347 | 0,0005 | 357 | 592 | 9,8 | |
| | 55/45 | 375 | 0,0005 | 403 | 516 | 10,1 | 1,2 |
| 0,35 | 30/70 | 317 | 0,0005 | 323 | 644 | 9,0 | |
| | 40/60 | 350 | 0,0009 | 363 | 560 | 10,0 | |
| | 45/55 | 341 | 0,0002 | 362 | 539 | 9,1 | 0,8 |
| | 50/55 | 354 | 0,0005 | 375 | 479 | 9,7 | |

Die Tabelle 1 zeigt, daß zumindest die jeweils mit dem optimalen Mischungsverhältnis Komponente A/Komponente B hergestellten Komposit-Keramiken mit den verschiedenen x-Werten der Komponente A für Vielschichtkondensatoren geeignet sind.

Figur 3 zeigt den Verlauf verschiedener Komposit-Keramiken mit einer Komponente A mit x = 0,42 (8 % Niob-Überschuss) und mit verschiedenen Mischungsverhältnissen Komponente A/Komponente B. Dabei zeigt Kurve 56 den Verlauf für das Mischungsverhältnis 60/40, Kurve 57 den Verlauf für das Mischungsverhältnis 70/30, Kurve 58 den Verlauf für das Mischungsverhältnis 62,5/37,5, Kurve 59 den Verlauf der reinen Komponente A und Kurve 60 den Verlauf der reinen Komponente B.

Figur 4 zeigt den Verlauf verschiedener Komposit-Keramiken mit einer Komponente A mit x = 0,40 (10 % Niob-Überschuss) und mit verschiedenen Mischungsverhältnissen Komponente A/Komponente B. Dabei zeigt Kurve 62 den Verlauf für das Mischungsverhältnis 60/40, Kurve 64 den Verlauf für das Mischungsverhältnis 40/60, Kurve 63 den Verlauf für das Mischungsverhältnis 50/50, Kurve 61 den Verlauf der reinen Komponente A und Kurve 65 den Verlauf der reinen Komponente B.

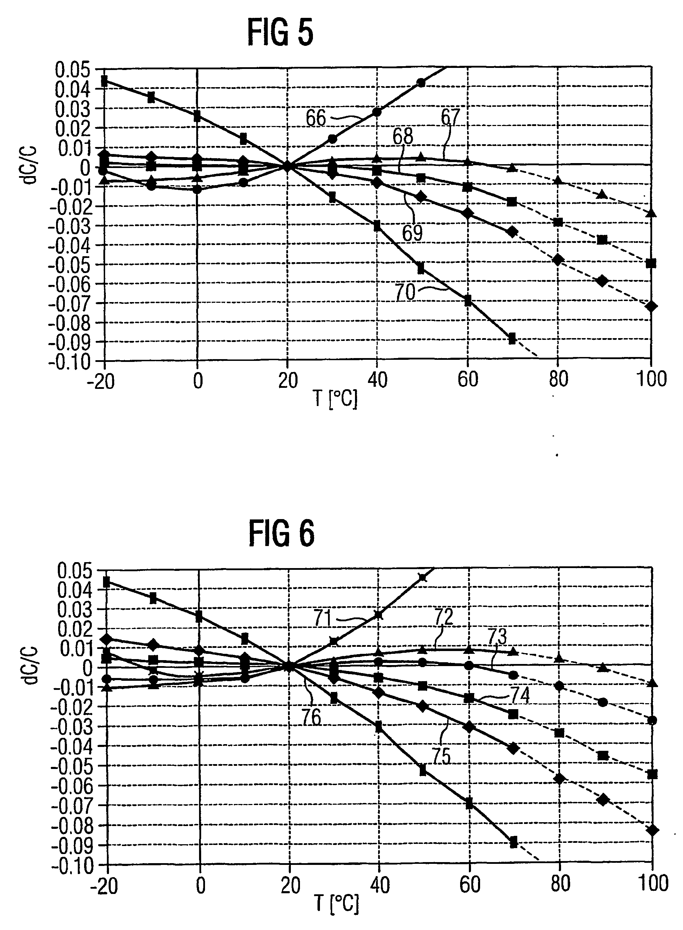

Figur 5 zeigt den Verlauf einer Komposit-Keramik mit einer Komponente A mit x = 0,38 (12 % Niob-Überschuss) und mit verschiedenen Mischungsverhältnissen Komponente A/Komponente B. Dabei zeigt Kurve 69 den Verlauf für das Mischungsverhältnis 35/65, Kurve 68 den Verlauf für das Mischungsverhältnis 45/55, Kurve 67 den Verlauf für das Mischungsverhältnis 55/45, Kurve 70 den Verlauf der reinen Komponente B und Kurve 66 den Verlauf der reinen Komponente A.

Figur 6 zeigt den Verlauf einer Komposit-Keramik mit einer Komponente A mit x = 0,35 (15 % Niob-Überschuss) und mit verschiedenen Mischungsverhältnissen Komponente A/Komponente B. Dabei zeigt Kurve 75 den Verlauf für das Mischungsverhältnis 30/70, Kurve 73 den Verlauf für das Mischungsverhältnis 40/60, Kurve 72 den Verlauf für das Mischungsverhältnis 50/50, Kurve 71 den Verlauf für das Mischungsverhältnis 45/55, Kurve 76 den Verlauf der reinen Komponente B und Kurve 71 den Verlauf der reinen Komponente A.

In weiteren Experimenten wurde untersucht, wie sich die Erhöhung des Borsäure-Anteils von 1 Gew.-% auf 1,5 Gew.-% auswirkt. Dabei wurde gefunden, daß der erhöhte Borsäure-Anteil das Sintern des ANT-Pulvers erleichtert. Man erhält zudem etwas höhere Werte für die Dielektrizitätskonstanten. Die dielektrischen Verluste, gemessen bei 1 MHz, zeigen dabei keine signifikante Veränderung mit der $H_3BO_3$-Konzentration, während die Qxf-Werte bei 2 GHz etwas schlechter sind als bei der Zugabe von 1 Gew.-% $H_3BO_3$.

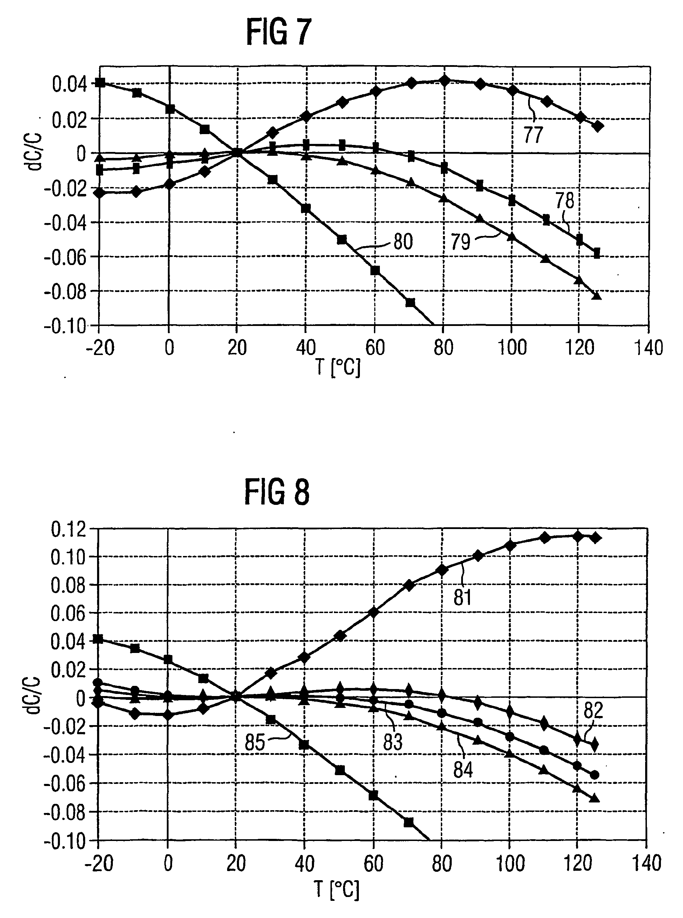

Figur 7 zeigt die Verläufe für ein ANTx-System, das unter Zugabe von 1,5 Gew.-% $H_3BO_3$ hergestellt wurde. Die übrigen Herstellungsparameter waren die gleichen wie bei den Proben mit 1 Gew.-% $H_3BO_3$. Dabei zeigt Kurve 77 den Verlauf für eine Komponente A mit x = 0,42, Kurve 78 den Verlauf für eine Mischung aus Komponente A und Komponente B mit einem gewichtsbezogenen Mischungsverhältnis 70/30, Kurve 79 eine Komposit-Keramik mit einem Mischungsverhältnis 60/40 und schließlich Kurve 80 den Verlauf für Komponente B mit x = 0,65.

Figur 8 zeigt den Temperaturverlauf einer erfindungsgemäßen komposit-Keramik (1,5 Gew.-% $H_3BO_3$) mit einer Komponente A mit x = 0,35 (15 % Niob-Überschuss) und mit verschiedenen Mischungsverhältnissen Komponente A/Komponente B. Kurve 81 zeigt die Komponente A mit x = 0,35, Kurve 82 zeigt eine Mischung mit einem Mischungsverhältnis 60/40, Kurve 83 mit einem Mischungsverhältnis 55/45, Kurve 84 mit einem Mischungsverhältnis 45/55 und Kurve 85 die Komponente B mit x = 0,65.

In der folgenden Tabelle 2 sind entsprechend der Tabelle 1 die dielektrischen Eigenschaften sowie die Schwindung für die Mischungen mit jeweils der Komponente B mit einem Niobüberschuss von 8 % (x = 0,42) beziehungsweise mit einem Niobüberschuss von 15 % (x = 0,65) eingetragen. Für das jeweils optimale Mischungsverhältnis Komponente A/Komponente B ist zudem die maximale relative Änderung der Dielektrizitätskonstanten im Temperaturintervall zwischen -20 °C und 80 °C in % angegeben.

Tabelle 2: Dielektrizitätskonstante und dielektrische Verluste einer Komposit-Keramik mit 1,5 Gew.-% $H_3BO_3$ als Sinterhilfsmittel, gesintert bei 1070 °C für eine Dauer von 5 Stunden (Komponente B = ANTx mit x = 0,65).

| x | A/B | 1 MHz | | 2 GHz | | S | $|\Delta\varepsilon/\varepsilon|_{max.}$ |
|---|---|---|---|---|---|---|---|
| | | $\varepsilon$ | $\tan\delta$ | $\varepsilon'$ | Qxf [GHz] | [%] | [%] |
| 0,42 | 60/40 | 398 | 0,0003 | 395 | 545 | 11,5 | |
| | 70/30 | 408 | 0,0004 | 408 | 492 | 10,9 | 1,4 |
| 0,35 | 60/40 | 414 | 0,0004 | 436 | 360 | 11,7 | 0,6 |
| | 55/45 | 397 | 0,0004 | 435 | 419 | 11,2 | |
| | 45/55 | 341 | 0,0002 | 362 | 539 | 10,7 | |

Im folgenden werden Kondensatoren mit speziellen Keramikmaterialien beschrieben, wobei die elektrischen Kenndaten der Kondensatoren gemessen wurden.

Für die Zusammensetzung A wurde ein kalzinierter Precursor aus 45,4 Gew.-% $Nb_2O_5$ und 54,6 Gew.-% $Ta_2O_5$ verwendet. Anschließend wurden 58,9 Gew.-% des Kalzinats mit 40,1 Gew.-% Silberoxid und 1 Gew.-% $H_3BO_3$ vermengt und erneut kalziniert. Hierbei hat das $H_3BO_3$ die Funktion eines Sinterhilfsmittels. Die Weiterverarbeitung dieser Mischung bis zu Grünfolien der Sorte A erfolgte mit dem Fachmann bekannten Methoden.

Zur Bildung der Zusammensetzung B wurde ein zweiter Precursor hergestellt, der eine Mischung von 24,5 Gew.-% $Nb_2O_5$ und 75,5 Gew.-% $Ta_2O_5$ enthält. Die weiteren Verfahrensschritte bis zur ersten Kalzination entsprechen denen, wie sie für die Zusammensetzung B durchgeführt wurden. Anschließend wurden 61,5 Gew.-% des Kalzinats mit 37,5 Gew.-% $Ag_2O$ und 1 Gew.-% $H_3BO_3$ vermischt und erneut kalziniert. Diese Mischung wurde anschließend weiterverarbeitet wie für die Grünfolien der Sorte A angegeben.

Es wurden zwei Kondensatoren hergestellt, wobei jeweils Grünfolien übereinander gestapelt, miteinander verpresst und anschließend zusammen mit den auf den Grünfolien befindlichen Metallisierungen gesintert wurden. Es wurde ein Kondensator 1 hergestellt mit zehn Dielektrikumschichten der Sorte A, die jeweils eine Schichtdicke von 20 $\mu$m und eine Fläche von 10 $mm^2$ aufweisen. Zudem wurde ein erfindungsgemäßer Kondensator 2 hergestellt mit jeweils fünf Dielektrikumschichten der Sorte A und fünf Dielektrikumschichten der Sorte B, jeweils mit den bei Kondensator 1 genannten geometrischen Abmessungen.

Die folgende Tabelle 3 zeigt die elektrischen Kenndaten der Kondensatoren 1 und 2. Der TKC bezieht sich dabei auf das Temperaturintervall von -20 °C bis 100 °C.

Tabelle 3: Elektrische Eigenschaften von beispielhaften Vielschichtkondensatoren.

| Kondensator | C [nF] | tanδ | TKC |
|---|---|---|---|
| 1 | 2,7 | 0,4 x 10$^{-3}$ | -3...6,3 % |
| 2 | 2,4 | 0,43 x 10$^{-3}$ | -3...1 % |

Die Tabelle 3 zeigt, daß der erfindungsgemäße Kondensator 2, der Dielektrikumschichten sowohl der Sorte A als auch der Sorte B umfaßt, ein wesentlich kleineres TKC aufweist, als der Kondensator 1 mit lediglich einer Sorte von Dielektrikumschichten.

Die Erfindung beschränkt sich nicht auf die dargestellten Ausführungsbeispiele, sondern wird in ihrer allgemeinsten Form durch Patentanspruch 1 definiert.

**Patentansprüche**

**1.** Kondensator mit

- zwei oder mehreren paarweise einander gegenüberliegenden Elektrodenschichten (1) und jeweils einer dazwischenliegenden Dielektrikumschicht (2),
- bei dem die Dielektrikumschichten (2) ein Keramikmaterial umfassen, das wenigstens zwei verschiedene, in jeweils voneinander getrennten Phasen vorliegende Komponenten enthält,
- bei dem die Komponenten jeweils eine Perowskitstruktur aufweisen, die an den A-Plätzen Silber und an den B-Plätzen Niob und Tantal enthält und
- bei dem die Zusammensetzung einer Komponente A und die Zusammensetzung einer Komponente B jeweils so gewählt ist, daß die Temperaturkoeffizienten ihrer Dielektrizitätskonstanten $TK\varepsilon_A$ und $TK\varepsilon_B$ in einem Temperaturintervall voneinander verschiedene Vorzeichen aufweisen.

**2.** Kondensator nach Anspruch 1,
bei dem der Volumenanteil der Komponente A am Gesamtvolumen der Komponenten A und B so gewählt ist, daß er weniger als 25 % von dem durch folgende Formel:

$$V \times S_A + (1-V) \times S_B = 0$$

berechneten Volumenanteil V abweicht, wobei $S_A$ und $S_B$ jeweils die Steigung derjenigen Gerade angeben, die am besten an den jeweiligen temperaturabhängigen Verlauf der relativen Änderung der Dielektrizitätskonstanten der Komponente A bzw. B in dem Temperaturintervall angepaßt ist.

**3.** Kondensator nach Anspruch 1 oder 2,
bei dem die Komponenten A und B jeweils die Zusammensetzung $Ag(Nb_{1-x}Ta_x)O_3$ aufweisen, und bei dem
für die Komponente A $0,50 < 1-x \leq 0,70$ und
für die Komponente B $0,30 \leq 1-x \leq 0,50$ gilt.

**4.** Kondensator nach Anspruch 3,
bei dem für die Komponente A $0,64 \leq 1-x \leq 0,66$
und für die Komponente B $0,34 \leq 1-x \leq 0,36$ gilt,
und bei dem das volumenbezogene Mischungsverhältnis Komponente A/Komponente B zwischen 40/60 und 50/50 beträgt.

**5.** Kondensator nach Anspruch 1-4,
bei dem die Komponenten A und B jeweils in Form von Partikeln einer Ausdehnung zwischen 5 und 500 $\mu$m vorliegen.

**6.** Kondensator nach Anspruch 5,
der durch Sintern einer Mischung von Partikeln der Komponente A mit Partikeln der Komponente B hergestellt ist.

**7.** Kondensator nach Anspruch 4,
bei dem die Komponenten A und B jeweils in unterschiedlichen Dielektrikumschichten (2) vorliegen, die durch dazwischenliegende Elektrodenschichten (1) voneinander getrennt sind.

**8.** Kondensator nach Anspruch 7,
bei dem die Komponenten A und B in Form von Partikeln einer Ausdehnung zwischen 100 nm und 5 $\mu$m vorliegen.

**9.** Kondensator nach Anspruch 8,
bei dem die Dielektrikumschichten (2) eine Dicke zwischen 1 und 50 $\mu$m aufweisen.

**10.** Kondensator nach Anspruch 7-9,
der durch Übereinanderstapeln von jeweils metallisierten keramischen Grünfolien der Komponente A und metallisierten keramischen Grünfolien der Komponente B in beliebiger Reihenfolge hergestellt ist.

**11.** Kondensator nach Anspruch 1 bis 10,
bei dem das Keramikmaterial als Sinterhilfsmittel Borsäure enthält.

**Claims**

**1.** Capacitor having

- two or more electrode layers (1), which are arranged opposite one another in pairs with in each case a dielectric layer (2) between them,
- in which the dielectric layers (2) comprise a ceramic material which contains at least two different components which are present in phases that are in each case separate from another,
- in which the components each have a perovskite structure which contains silver at the A sites and niobium and tantalum at the B sites, and
- in which the composition of a component A and the composition of a component B are in each case selected in such a way that the temperature coefficients of their dielectric constants $TK\varepsilon_A$ and $TK\varepsilon_B$ have different signs in a temperature range.

**2.** Capacitor according to Claim 1, in which the proportion by volume of component A in the total volume of components A and B is selected in such a way that it deviates by less than 25% from the volumetric proportion V calculated by the following formula:

$$V \times S_A + (1-V) \times S_B = 0$$

where $S_A$ and $S_B$ respectively denote the inclination of the straight line which is best matched to the respective temperature-dependent profile of the relative change in the dielectric constants of components A and B, respectively, in the temperature range.

**3.** Capacitor according to Claim 1 or 2, in which components A and B each have the composition $Ag(Nb_{1-x}Ta_x)O_3$, and in which $0.50 < 1-x \leq 0.70$ applies to component A and $0.30 \leq 1-x \leq 0.50$ applies to component B.

**4.** Capacitor according to Claim 3, in which $0.64 \leq 1-x \leq 0.66$ applies to component A and $0.34 \leq 1-x \leq 0.36$ applies to component B, and in which the volume-based mixing ratio component A/component B is between 40/60 and 50/50.

**5.** Capacitor according to Claims 1-4, in which components A and B are each in the form of particles of a size of between 5 and 500 $\mu$m.

**6.** Capacitor according to Claim 5, which is produced by sintering a mixture of particles of component A with particles of component B.

**7.** Capacitor according to Claim 4, in which components A and B are each present in different dielectric layers (2), which are separated from one another by electrode layers (1) between them.

**8.** Capacitor according to Claim 7, in which components A and B are in the form of particles of a size of between 100

nm and 5 $\mu$m.

9. Capacitor according to Claim 8, in which the dielectric layers (2) are between 1 and 50 $\mu$m thick.

10. Capacitor according to Claims 7-9, which has been produced by stacking in each case metallized ceramic green sheets of component A and metallized ceramic green sheets of component B on top of one another in any desired sequence.

11. Capacitor according to Claims 1 to 10, in which the ceramic material contains boric acid as sintering aid.

**Revendications**

1. Condensateur comportant

   - deux ou plusieurs couches (1) formant électrodes disposées les unes en face des autres par paires et une couche (2) de diélectrique respective se trouvant entre elles,
   - dans lequel les couches (2) de diélectrique comportent un matériau en céramique, qui contient au moins deux constituants différents présents dans des phases séparées l'une de l'autre,
   - dans lequel les constituants ont chacun une structure perowskite, qui contient aux emplacements A de l'argent et aux emplacements B du niobium et du tantale, et
   - dans lequel la composition d'un constituant A et la composition d'un constituant B est choisie de sorte que les coefficients de variation en fonction de la température de leur constante diélectrique $TK\varepsilon_A$ et $TK\varepsilon_B$ ont des signes différents l'un de l'autre dans un intervalle de température.

2. Condensateur suivant la revendication 1,
   dans lequel la proportion en volume du constituant A par rapport au volume total des constituants A et B est choisie de sorte qu'elle s'écarte de moins de 25 % de la proportion V en volume calculée par la formule suivante:

$$V \ x \ S_A \ + \ (1-V) \ x \ S_B \ = \ 0$$

   dans lequel $S_A$ et $S_B$ indiquent les pentes des droites respectives qui s'adaptent le mieux dans l'intervalle de température à la courbe respective fonction de la température des variations relatives des constantes diélectriques des constituants A, respectivement B.

3. Condensateur suivant la revendication 1 ou 2,
   dans lequel les constituants A et B ont chacun la composition $Ag(Nb_{1-x}Ta_x)O_3$ et dans lequel,
   pour le constituant A $0,50 < 1-x \leq 0,70$ et
   pour le constituant B $0,30 \leq 1-x \leq 0,50$.

4. Condensateur suivant la revendication 3,
   dans lequel pour le constituant A $0,64 \leq 1-x \leq 0,66$
   et pour le constituant B $0,34 \leq 1-x \leq 0,36$,
   et le rapport de mélange en volume du constituant A/constituant B est compris entre 40/60 et 50/50.

5. Condensateur suivant l'une des revendications 1 à 4,
   dans lequel les constituants A et B se présentent respectivement sous la forme de particules ayant une étendue comprise entre 5 et 500 $\mu$m.

6. Condensateur suivant la revendication 5,
   qui est fabriqué par frittage d'un mélange de particules du constituant A avec des particules du constituant B.

7. Condensateur suivant la revendication 4,
   dans lequel les constituants A et B se présentent respectivement en des couches (2) de diélectriques différentes,
   qui sont séparées mutuellement par des couches (1) formant électrode se trouvant entre elles.

**8.** Condensateur suivant la revendication 7,
dans lequel les constituants A et B se présentent sous la forme de particules ayant une étendue comprise entre 100 nm et 5 $\mu$m.

**9.** Condensateur suivant la revendication 8,
dans lequel les couches (2) de diélectrique ont une épaisseur comprise entre 1 et 50 $\mu$m.

**10.** Condensateur suivant la revendication 7 à 9,
qui est fabriqué par empilement les unes au-dessus des autres de feuilles à vert de céramique métallisée du constituant A et de feuilles à vert de céramique métallisée du constituant B suivant n'importe quel ordre.

**11.** condensateur suivant l'une des revendications 1 à 10,
dans lequel le matériau en céramique contient de l'acide borique en tant qu'adjuvant de frittage.

## FIG 1

## FIG 2

## FIG 3

## FIG 4

EP 1 314 173 B1

**FIG 5**

**FIG 6**

## FIG 7

## FIG 8